**Europäisches Patentamt**

(19) **European Patent Office**    (11) Numéro de publication: **0 072 720**

**Office européen des brevets**    **B1**

(12) **FASCICULE DE BREVET EUROPÉEN**

(45) Date de publication du fascicule du brevet:    (51) Int. Cl.⁴: **B 64 C 25/20, B 64 C 25/10**
26.11.86

(21) Numéro de dépôt: **82401362.7**

(22) Date de dépôt: **22.07.82**

(54) Train d'atterrissage pour aéronef.

(30) Priorité: **12.08.81 FR 8115586**

(43) Date de publication de la demande:
**23.02.83 Bulletin 83/8**

(45) Mention de la délivrance du brevet:
**26.11.86 Bulletin 86/48**

(84) Etats contractants désignés:
**DE GB IT SE**

(56) Documents cité:
**FR-A-1 547 764**
**FR-A-2 315 431**
**GB-A-686 953**
**GB-A-835 658**
**US-A-2 959 381**
**US-A-2 960 287**
**US-A-3 514 057**
**US-A-4 147 316**

(73) Titulaire: **MESSIER- HISPANO- BUGATTI (S.A), 5, rue Louis Lejeune, F-92120 Montrouge (FR)**

(72) Inventeur: **Turiot, André, 77, Ave de l'Escadrille Normandie Niemen, F-91390 Morsang S/Orge (FR)**

(74) Mandataire: **Chevallier, Robert Marie Georges, Société SEDIC 40, rue Victor Basch, F-92120 Montrouge (FR)**

LIBER, STOCKHOLM 1986

## Description

La présente invention concerne les trains d'atterrissage pour aéronefs, et plus particulièrement ceux qui peuvent se rétracter dans des logements prévus à cet effet dans le fuselage ou la voilure de ces aéronefs.

On connaît déjà des trains d'atterrissage qui sont constitués essentiellement d'une jambe portant à une extrémité des moyens de roulement et à son autre extrémité des moyens d'accrochage sur au moins un point de l'aéronef, et plus particulièrement de sa structure rigide.

A ces moyens de roulement, sont généralement associés des amortisseurs permettant d'absorber les chocs auxquels les moyens de roulement peuvent être soumis lorsque l'aéronef roule sur une piste.

Le train d'atterrissage comporte aussi généralement une contre-fiche brisable reliée à une de ses extrémités à la jambe et à son autre extrémité à un point rigide de la même structure de l'aéronef.

En outre, afin de permettre la rétractation et la sortie du train d'atterrissage, celui-ci comporte des moyens du type vérin, permettant, d'une part, de briser l'alignement de la contre-fiche, et, d'autre part, d'exercer une traction sur ce train afin de lui permettre, soit de remonter dans les trappes prévues à cet effet pour le placer en position rétractée, ou soit de le faire sortir de ces trappes pour le placer en position sortie lorsque l'aéronef est prêt à atterrir.

Par exemple le document US-A- 2.959.387 correspondant au préambule de la revendication 1, se rapporte à un train d'atterrissage rétractable qui comprend une jambe articulée autour d un axe, une contre-fiche composée de deux leviers articulés ensemble autour d'un axe à une extrémité et articulés chacun autour d'un autre axe respectif à l'autre extrémité; ces quatre axes sont parallèles et l'un des leviers a une configuration en U. Mais en état d'extension totale de la jambe, les deux leviers de la contre-fiche ont leurs axes longitudinaux qui sont en prolonge menten faisant un angle de 90° avec leur axe d'articulation. Il en découle un encombrement plutôt important de cette contre-fiche en état de fermeture totale.

Bien entendu, il existe d'autres types de trains d'atterrissage tels qu'ils viennent d'être décrits ci-dessus. Ceux-ci sont généralement conçus en fonction de différentes considérations, notamment de la forme du fuselage de l'aéronef, de la possibilité de points d'accrochage sur ce fuselage, du poids de l'aéronef, de la capacité de celui-ci, des différents types d'utilisations, etc.

Plus précisément, la présente invention a pour but de réaliser un train d'atterrissage d'une conception la plus simple possible, mais qui puisse malgré tout s'adapter à des avions ou plus généralement à des aéronefs, dont les points d'accrochage de la jambe et de la contre-fiche ne sont pas alignés et qui peuvent être décalés par rapport à un plan de symétrie de l'avion. Dans ce genre de structure, la réalisation des trains d'atterrissage pose énormément de problèmes. Ceux-ci ont amené des solutions fort compliquées et onéreuses, mais surtout, à la réalisation de trains ayant un poids très élevé, ce qui est toujours nuisible à la construction d'un aéronef.

Plus précisément, la présente invention a pour objet un train d'atterrissage pour aéronef, comportant une structure rigide, comprenant une jambe montée rotative autour d'un premier axe fixe par rapport à ladite structure rigide, ue contre-fiche principale formée d'au moins deux leviers articulés ensemble autour d'un quatrième axe, avec leur extrémités articulées respectivement autour d'un deuxième axe fixe par rapport à ladite structure rigide et d'un troisième axe fixe par rapport à ladite jambe, des moyens pour commander la rotation des deux leviers l'un par rapport à l'autre, lesdits premier, deuxième, troisième et quatrième axes étant tous parallèles entre eux, dans lequel les deux leviers de la contre-fiche principale comprennent deux étiers en U ayant des branches articulées par le quatrième axe de rotation et caractérisé en ce que les deux leviers ont en section droite un profil à membrure centrale et à longerons et sont articulés par des étriers autour dudit axe, la direction générale de chacun de ces deux leviers se trouve sur une direction commune qui rencontre le quatrième axe en un point S situé entre les branches des étriers, ce point S étant le som met d'un angle oblique $\alpha$ défini par le quatrième axe et la direction commune de la contre-fiche principale, le montage étant tel qu'une branche des deux étriers est située entre les deux branches de l'autre, et que la branche située du côté de l'angle aigu, défini par la direction dudit quatrième axe avec la direction commune est située au dessus de l'autre branche de l'autre étrier par rapport au point S.

Selon une autre caractéristique de l'invention, la position dudit deuxième axe sur ladite structure rigide, est déportée en dehors d'un plan perpendiculaire au premier axe et passant par ladite jambe.

Selon une autre caractéristique, la position dudit deuxième axe est située au-dessus d'un plan passant par la position du premier axe et perpendiculaire à la jambe quand le train est sorti.

Selon une autre caractéristique de la présente invention, les moyens pour commander la rotation des deux leviers comportent une contre-fiche brisable auxiliaire dont les deux extrémités sont montées rotatives autour respectivement d'un cinquième axe appartenant à ladite structure rigide et un sixième axe appartenant à l'un des deux dits leviers de la contre-fiche principale, ladite contre-fiche brisable auxiliaire étant constituée de deux bielles montées rotatives l'une par rapport à l'autre autour d'un septième axe, lesdits cinquième, sixième et septième axes étant parallèles entre eux et au groupe des premier, deuxième, troisième et quatrième axes.

D'autres caractéristiques et avantages de la présente invention apparaîtront au cours de la description suivante donnée en regard des dessins annexés à titre illustratif mais nullement limitatif, dans lesquels:

- la figure 1 représente, vu en semi perspective, un mode de réalisation d'un train selon l'invention,

- les figures 2 et 3 représentent, sous forme schématique, la position du train selon la figure 1, respectivement dans sa position dite sortie et dans sa position dite rentrée, et,

- la figure 4 un mode de réalisation d'un détail essentiel de la structure du train selon la figure 1.

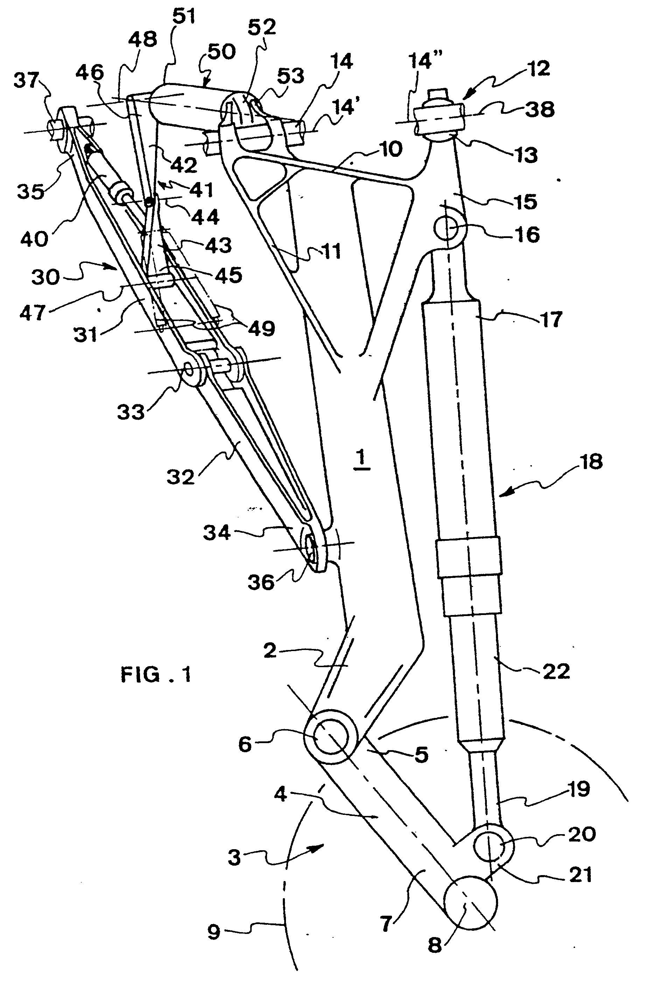

La figure 1 représente un mode de réalisation avantageux d'un train d'atterrissage selon l'invention. Ce train comporte une jambe 1, réalisée en pièce relativement massive, dont une extrémité 2 coopère avec des moyens de roulement 3.

Ces moyens de roulement peuvent être constitués par exemple comme illustrés sur la figure par un balancier 4 dont une extrémité 5 est liée à l'extrémité 2 de la jambe 1 par un axe de rotation 6. L'autre extrémité 7 du balancier 4 porte sur un axe 8, une roue 9, ou un ensemble de roues disposé par exemple de part et d'autre de ce balancier 4. Bien entendu, dans ce mode de réalisation il a été illustré un balancier mais, dans certains cas, le mode de roulement peut être constitué par un boggie par exemple ou tout autre, suivant les nécessités techniques pour le roulage de l'avion sur les pistes. L'autre extrémité 10 de la jambe 1, comportant des renforts 11, supporte des moyens d'accrochage 12 sur une structure rigide d'un aéronef. Ces moyens d'accrochage sont constitués par exemple par des paliers 13 disposés autour d'un premier axe 14 qui sera solidaire de la structure rigide de l'aéronef. Sur une partie excentrée 15 de cette jambe 1, avantageusement à proximité de l'extrémité 10 et sur les renforts 11, est fixé un axe de rotation 16 sur lequel est montée une première extrémité par exemple le cylindre 17 d'un amortisseur 18. L'autre extrémité 19 de cet amortisseur 18 est accrochée sur un autre axe de roulement 20 positionné sur une partie excentrée 21 de l'extrémité 7 du balancier 4. Cette extrémité 19 de l'amortisseur 18 sera alors constituée par la tige 22 de l'amortisseur.

Comme dit précédemment, ce train d'atterrissage comporte une contre-fiche briseuse 30 constituée essentiellement de deux leviers 31 et 32 articulés l'un sur l'autre autour d'un axe 33.

Par contre, les deux autres extrémités 34 et 35 de cette contre-fiche 30 sont reliés respectivement à un axe de rotation 36 définissant le troisième axe de rotation, solidaire de la jambe 1, et un axe 37 définissant le second axe de rotation, qui est solidaire de la structure rigide de l'aéronef.

Le point d'accrochage 37 de l'extrémité 35 de la contre-fiche 30 est situé à un endroit excentré par rapport au point d'accrochage de l'axe 14 autour duquel est montée pivotante la jambe 1.

En d'autres termes, les points d'accrochage définis par, sensiblement la position de l'axe 37 et les deux points de l'axe 14, en l'occurrence 14' et 14", constituent un triangle obtu, c'est-à-dire que la projection du point 37 sur la direction 38 de l'axe 14 est situé à l'extérieure des deux points 14' et 14".

Comme il a été dit ci-dessus, la contre-fiche 30 est brisable autour de l'axe 33 définissant le quatrième axe de rotation. Pour cela, le train comporte des moyens pour commander la "brisure" de cette contre-fiche, c'est-à-dire le repliement du levier 32 par rapport au levier 31. Ces moyens pour commander la "brisure" de la contre-fiche 30 sont constitués par un vérin 40 coopérant avec une contre-fiche auxiliaire 41 constituée de deux biellettes 42 et 43 articulées sur un même axe 44 définissant le septième axe de rotation, et dont les deux autres extrémités 45 et 46 sont articulées sur un sixième axe 47 de rotation sur, par exemple, le levier 31 de la contre-fiche 30, et un cinquième axe 48 solidaire par exemple de la structure rigide de l'aéronef.

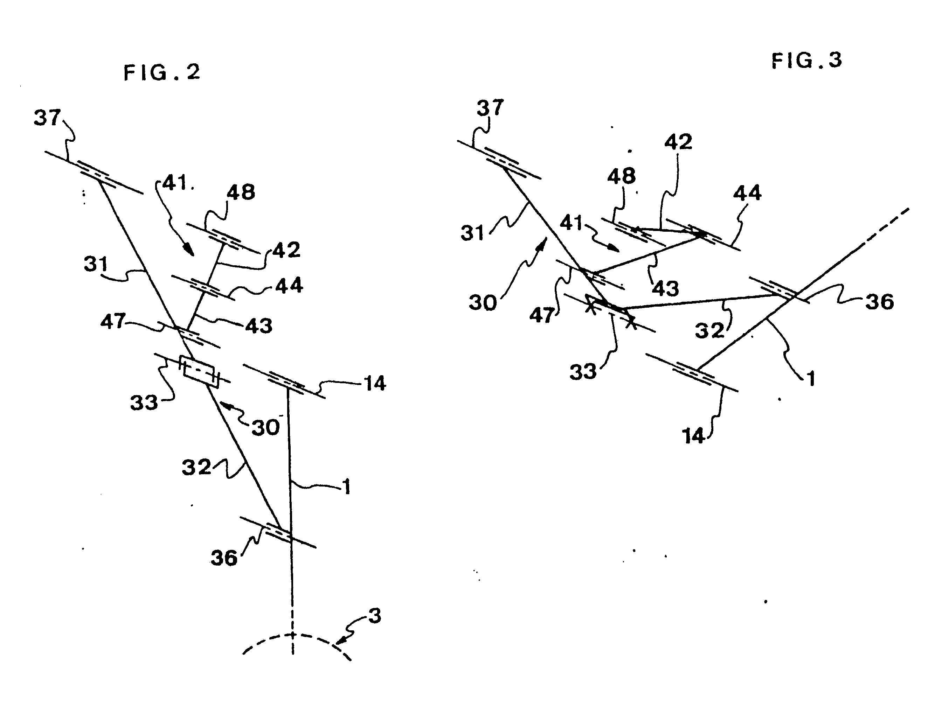

Enfin, avantageusement, le train peut être associé à des moyens de relevage schématiquement illustrés par un vérin 50, dont une extrémité 51 est fixée par rapport à la structure rigide de l'aéronef, et dont l'autre extrémité 52 est reliée à un levier fixé sur une partie excentrée, par exemple 53, de la jambe, de façon à exercer par l'intermédiaire de ce vérin 50, un couple de rotation sur la jambe pour la faire remonter ou descendre suivant que le train doit être positionné dans des positions dites rentrée ou sortie, comme cela sera explicité plus en détail en regard des figures 2 et 3 explicitant ce fonctionnement selon l'invention.

Le train dont la structure vient d'être définie ci-dessus présente un avantage très important car, en effet, tous les axes de rotation, l'axe 14 autour duquel est articulée la jambe 1, l'axe 37 de la contre-fiche 30 et les axes 33 et 36 de cette même contre-fiche, ainsi que les axes 44, 47 et 48 de la contre-fiche auxiliaire 41, sont tous parallèles. Ceci permet une construction très aisée de la structure de cet atterrisseur, car il n'y a pas besoin d'utiliser par exemple sur ses axes des paliers comme des rotules, mais uniquement des paliers simples qui sont de conception et de réalisation aisées, et qui, de plus, pour le domaine aéronautique, présentent des poids beaucoup plus faibles que des moyens d'accrochage comme des rotules.

Le fonctionnement du train, lorsqu'il roule sur un sol, présentant des aspérités, est le suivant. Quand la roue 9 rencontre par exemple une partie en relief ou en creux, la roue subit donc un choc qui entraîne, dans une rotation senestrorsum ou dextrorsum, le balancier 4 par rapport à la jambe 1. Dans ce cas, l'amortisseur, par l'intermédiaire de sa tige 22, est actionné et les chocs sont ainsi amortis et absorbés. Ce phénomène est bien connu, il ne sera plus amplement developpé dans cette présente description. Par contre, le mode de fonctionnement du train, quand il passe de sa position sortie à sa position rétractée, et vice et versa, est le suivant.

Tout d'abord, il est précisé que ce fonctionnement est plus amplement explicité en regard des figures 2 et 3, dans lesquelles sont schématisés les principaux éléments constitutifs du train selon la figure 1, et donc les mêmes références sur ces figures 1, 2 et 3 désignent les mêmes éléments. La figure 2 représente le train dans sa position dite sortie, c'est-à-dire lorsque l'aéronef est prêt à rouler ou roule sur une piste. Dans ce cas, la contre-fiche 30 ainsi que la contre-fiche auxiliaire 41, sont toutes les deux déployées, c'est-àdire que leurs leviers et bielles respéctifs 31, 32 et 42, 43, sont tous alignés.

Lorsque l'on veut effectuer le relevage de ce train, au moyen par exemple du vérin 40, tel que représenté sur la figure 1, on brise l'alignément des deux bielles 42, 43 de façon que soit exercée une traction sur l'axe 47. Dans ce cas, la contre-fiche 30 se brise elle aussi, autour de l'axe 33, de telle façon que les deux léviérs 31 et 32 pivotent l'un par rapport à l'autre autour de cet axe 33.

De cette façon, en se brisant, la contre-fiche 30 exerce une traction sur l'axe 36 qui tend alors à faire pivoter la jambe 1 autour de son axe 14, la longueur et le débattement de ces leviers et des positions des axes respéctifs de ces contre-fiches principale et auxiliaire sont déterminées de façon que la jambe 1 puisse prendre une position définitive, c'est-à-dire celle qui correspond à la position train rentré dans les logements prévus à cet effet dans les aéronefs.

On voit donc dans ce cas l'avantagé principal d'une telle réalisation; comme tous les axes 37, 33, 36, 14, 47, 44 et 48 sont parallèles, toutes les rotations s'effectuent sans aucune difficulté toutes parallèlement à elle-même et ainsi, le passage de la position train sorti selon la figure 2 à la position train rentré selon la figure 3, s'effectue sans aucune difficulté.

Comme il a été mentionné précédemment, les axes 14, 37 et 48 sont dans des positions décalées par rapport à une pérpendiculaire à ces axes. De ce fait, lorsque le pliage de ces contre-fiches s'effectue, celles-ci se placent dans un plan qui passe sensiblement par la jambe 1, ce qui fait que tous les éléments des deux contre-fiches, c'est-à-dire en l'occurrence les leviers 31, 32, et les bielles 42, 43, se placent dans un même plan. L'encombrement en résultant, essentiellement en hauteur de tous ces éléments repliés, est réduit au maximum. Très schématiquement, tous ces éléménts se placent sensiblement dans un quadrilatère défini par les emplacements des fixations des points d'articulation 37, 48, 14, 36 lorsque, bien entendu, le train est en position rentrée.

Avantageusement, pour que le train puisse rentrer de façon pratique, sans exercer d'efforts importants sur les contre-fiches, l'axe 37 par rapport à l'axe 14 et à l'axe 36, se trouve légèrement dans un plan supérieur à celui passant par l'axe 14, et l'axe 36 quand le train est en position réntrée (figure 3), de façon que la contre-fiche puisse se plier mais d'un angle inférieur de 180°. Ceci fait que la position de l'axe 37 est située en-dessus d'un plan passant par l'axe 14 et perpendiculaire à la jambe 1 quand le train est en position sortie. En fait, ce plan est celui de référence de la structure rigidé et en général celui de la voilure de l'aéronef.

On voit donc de façon résumée l'avantage d'un tel train, c'est-à-dire que, tous les axes étant parallèles entre eux, toutes les rotations s'effectuent sans efforts, et, de plus, du fait de la disposition particulière des points d'attache sur la structure rigide de la jambe et des deux contre-fiches principale et auxiliaire, l'encombrement, une fois le train rentré est minimum en hauteur, ce que permet essentiellement à ce type de train d'atterrissage d'être utilisé pour être rentré, tout au moins en partie, dans les voilures, c'est-à-dire dans les ailes des aéronefs.

Il peut être prévu avantageusement sur le levier 31 de la contre-fiche 30, deux ressorts 49 identiques, disposés, d'une part, de chaque côté du levier sur un axe parallèle aux axes 36, 33, 37, et, d'autre part, sur la biellette 43 de la contre-fiche auxiliaire 41 au moyen d'un axe également parallèle aux autres axes de ce train.

Ces deux ressorts 49 facilitent le pliement des contre-fiches, principale 30 et auxiliaire 41 en ajoutant leurs efforts à celui de vérin 40.

Comme il a été mentionné précédemment, les deux axes 37 et 36, lorsque le train passe en position sortie de la position rentrée ne se superposent pas et les deux axes 37 et 36 sont suffisamment éloignés l'un de l'autre pour que les deux leviers 31 et 32 forment un angle non nul lorsque la contre-fiche principale 30 est repliée. Dans ce cas, il est avantageux de réaliser une contre-fiche spécialement adaptée pour ce mode de réalisation de train d'atterrissage.

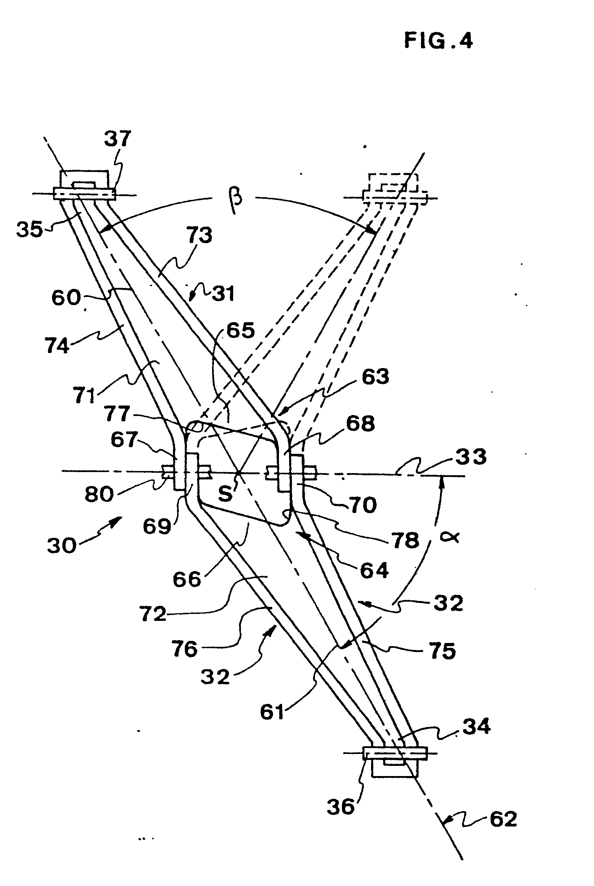

La figure 4 illustre de façon plus concrète un mode de réalisation d'une contre-fiche pouvant être utilisée dans ce mode de réalisation de train d'atterrissage afin que les deux leviers 31 et 32, lorsqu'ils se replient, puissent se trouver plus aisément, ou tendent de se trouver dans un plan sans qu'ils aient à se superposer.

A cet effet, lorsque le train d'atterrissage est sorti, les deux leviers 31 et 32 de la contre-fiche 30 sont alignés l'un par rapport à l'autre. Les directions générales 60 et 61 respectives des leviers 31 et 32 définissent une direction commune 62.

Les extrémités respectives 63 et 64 des leviers 31 et 32, montées rotatives sur un arbre 80 positionné sur l'axe 33 défini auparavant, définissent chacune un étrier 65 et 66 en forme de U. Plus précisément, l'étrier 65 du levier 31 comporte deux branches latérales 67 et 68 et l'étrier 66 comporte deux branches latérales 69 et 70. Dans cet exemple de réalisation, les étriers 65 et 66, montés rotatifs autour de l'axe 33, sont agencés de telle façon que la branche 69 de l'étrier 66 soit située entre les branches 67 et 68 de l'étrier 65. De plus, les branches 67 et 69, d'une part, et les branches 68 et 70, d'autre part, sont respectivement adjacentes, en contact l'une de l'autre. Ainsi, les branches 67 et 70 sont externes à la contre-fiche 30, tandis que les branches 69 et 68 sont internes; la distance séparant la branche 69 de la branche 68 est maximale.

De plus, les deux leviers 31 et 32 de la contre-fiche sont constitués respectivement par une membrure centrale 71, 72, bordée des deux côtés par des longerons transversaux de renfort 73, 74, d'une part, et 75, 76, d'autre part.

Comme décrit précédemment, l'extrémité 35 du levier 31 est solidaire de l'axe 37 monté sur un point de la structure de l'aéronef, et l'extrémité 34 du levier 32 est montée sur l'axe 36 appartenant à la jambe 1 du train d'atterrissage.

En position train sorti, l'axe 33 et la direction générale 62 de la contre-fiche 30 forment un angle oblique α ayant comme sommet le point S intersection de l'axe 33 avec la direction 62.

Lors de la rentrée du train dans la structure de l'aéronef, la contre-fiche 30 pivote autour de l'axe 33 entraînant le levier 32 dans la position telle qu'illustrée en pointillé sur la figure 4.

A ce moment là, les deux leviers 31 et 32 forment sensiblement un angle β ayant comme sommet le point S. La disposition de ces deux leviers, et de leurs moyens de couplage par les deux étriers agencés comme decrit ci-dessus, permet un minimum position lorsque le train est rentré, d'où un encombrement réduit dans l'aéronef.

En effet, lorsque les deux leviers 31,32 sont repliés et du fait de la disposition des branches 67 à 70, le longeron 75 ne coupe pas le longeron 73 et le longeron 76 coupe le plus loin possible le longeron 73, essentiellement grâce à la distance maximale séparant les deux branches 68 et 69. Les dégagements 77 de l'étrier 65 et 78 de l'étrier 66 permettent respectivement le passage des longerons 73 et 76. En conséquence, seulement deux des longerons se croisent, et, en plus, à une distance la plus éloignée possible, ce qui assure un pliage maximum de ce train d'atterrissage, ainsi qu'un encombrement minimum dans la structure de l'aéronef.

## Revendications

1) Train d'atterrissage pour aéronef, comportant une structure rigide, comprenant une jambe (1) montée rotative autour d'un premier axe (14) fixe par rapport à ladite structure rigide, une contre-fiche principale (30) formée d'au moins deux leviers (37,32) articulés ensemble autour d'un quatrième axe (33), avec leurs extrémités articulées respectivement autour d'un deuxième (37) axe fixe par rapport à ladite structure rigide et d'un troisième (36) axe fixe par rapport à ladite jambe, des moyens (40, 41) pour commander la rotation des deux dits leviers (31, 32) l'un par rapport à l'autre, lesdits premier (14), deuxième (37), troisième (36) et quatrième (33) axes étant tous parallèles entre eux, dans lequel les deux leviers (37, 32) de la contre-fiche principale (30) comprennent deux étriers (65, 66) en U ayant des branches (67, 68, 69, 70) articulées par le quatrième axe de rotation (33), caractérisé en ce que les deux leviers (37, 32) ont en section droite un profil à membrure centrale (71, 72) et à longerons (73, 74, 75, 76) et sont articulés par des étriers (65, 66) autour dudit axe (33), la direction générale (60, 61) de chacun de ces deux leviers se trouve en position "train sorti" sur une direction commune (62) qui rencontre le quatrième axe (33) en un point S situé entre les branches des étriers, ce point S étant le sommet d'un angle oblique α défini par le quatrième axe (33) et la direction commune (62) de la contre-fiche principale (30), le montage étant tel qu'une branche (68, 69) des deux étriers est située entre les deux branches (67, 70) de l'autre, et que la branche (67, 70) située du côté de l'angle aigu, défini par la direction dudit quatrième axe avec la direction commune (62) est située au-dessus de l'autre branche (69, 68) de l'autre étrier par rapport au point S.

2) Train d'atterrissage selon la revendication 1, caractérisé par le fait que la position dudit deuxième axe (37) sur ladite structure rigide, est déportée en dehors d'un plan perpendiculaire audit premier axe (14) et passant par ladite jambe (1).

3) Train d'atterrissage selon l'une des revendications 1 et 2, caractérisé par le fait que la position dudit deuxième axe (37) est située au-dessus d'un plan passant par la position du premier axe (14) et perpendiculaire à la jambe (1) quand le train est sorti.

4) Train d'atterrissage selon l'une des revendications précédentes, caractérisé par le fait que les moyens pour commander la rotation des deux leviers (31, 32) comportent une contre-fiche brisable auxiliaire (47) dont les deux extrémités sont montées rotatives autour respectivement d'un cinquième axe (48) appartenant à ladite structure rigide et un sixième axe (47) appartenant à l'un des deux dits leviers de la contre-fiche principale (30), ladite contre-fiche brisable auxiliaire (41) étant constituée de deux bielles (42, 43) montées rotatives l'une par rapport à l'autre autour d'un septième axe (44), lesdits cinquième, sixième et septième axes étant parallèles entre eux et au groupe des premier, deuxième, troisième et quatrième axes.

5) Train d'atterrissage selon la revendication 4, caractérisé par le fait qu'il comporte des moyens commandables (40) coopérant avec ladite contre-fiche auxiliaire (47) pour la briser et la maintenir rigide.

6) Train d'atterrissage selon la revendication 1, caractérisé par le fait que la distance séparant les deux dites branches internes (68, 69), aux deux autres branches (67, 70) est maximale.

7) Train d'atterrissage selon la revendication 6, caractérisé par le fait que l'une des branches (67, 68) d'un des étriers (65) est au contact d'une des branches (69,70) de l'autre étrier (66).

## Patentansprüche

1) Fahrwerk für ein Flugzeug umfassend eine starre Struktur und mit einem Bein (1), das drehbar um eine erste Achse (14), die fest in Bezug auf die besagte starre Struktur ist, montiert ist, einer Hauptstrebe (30), die aus wenigstens zwei Hebeln (31, 32), die gemeinsam um eine vierte Achse (33) angelenkt und mit ihren Enden um eine in Bezug auf die starre Struktur feste zweite Achse (37) und eine in Bezug auf das besagte Bein feste dritte Achse (36) angelenkt sind, gebildet ist, Mitteln (40, 41) zum Steuern der Drehung der beiden besagten Hebel (31, 32) gegeneinander, wobei die besagte erste (14), zweite (37), dritte (36) und vierte (33) Achse sämtlich parallel zueinander sind, und bei dem die beiden Hebel (31, 32) der Hauptstrebe (30) zwei U-förmige Bügel (65, 66), die Schenkel (67, 68, 69, 70) aufweisen, die durch die vierte Drehachse (33) gelenkig verbunden sind, umfassen, dadurch gekennzeichnet, daß die beiden Hebel (31, 32) im Querschnitt ein Profil aus einem mittleren Steg (71, 72) und Seitenholmen (73, 74, 75, 76) besitzen und über Bügel (65, 66) um die besagte Achse (33) angelenkt sind, wobei sich die allgemeine Richtung (60, 61) jedes dieser beiden Hebel in "ausgefahrener Position" des Fahrwerks in einer gemeinsamen Richtung (62) befindet, die die vierte Achse (33) an einem Punkt trifft, der sich zwischen den Schenkeln der Bügel befindet, wobei dieser Punkt S die Spitze eines schiefen Winkel α ist, der durch die vierte Achse (33) und die gemeinsame Richtung (62) der Hauptstrebe (30) definiert ist, wobei die Montage derart ist, daß ein Schenkel (68, 69) der beiden Bügel zwischen den beiden Schenkeln (67, 70) des anderen angeordnet ist, und daß der Schenkel (67, 70), der sich neben dem spitzen Winkel, der durch die Richtung der besagten vierten Achse mit der gemeinsamen Richtung (62) definiert ist, befindet, sich über dem anderen Schenkel (69, 68) des anderen Bügels in Bezug auf den Punkt S befindet.

2) Fahrwerk gemäß Anspruch 1, dadurch gekennzeichnet, daß die Position der besagten zweiten Achse (37) an der besagten starren Struktur außerhalb einer Ebene senkrecht zur besagten ersten Achse (14) und durch das besagte Bein (1) verlaufend liegt.

3) Fahrwerk nach einem der Ansprüche 1 und 2, dadurch gekennzeichnet, daß die Position der besagten zweiten Achse (37) sich oberhalb einer Ebene befindet, die durch die Position der ersten Achse (14) und senkrecht zu dem Bein (1), wenn das Fahrwerk ausgefahren ist, verläuft.

4) Fahrwerk nach einem der vorhergehenden Ansprüche, dadurch gekennzeichnet, daß die Mittel zum Steuern der Drehung der beiden Hebel (31, 32) eine zerbrechliche Hilfsstrebe (41) umfaßt, deren beide Enden drehbar um eine fünfte Achse (48), die zur besagten starren Struktur gehört, bzw. um eine sechste Achse (47), die zu einem der beiden besagten Hebel der Hauptstrebe (30) gehört, montiert sind, wobei die zerbrechliche Hilfsstrebe (41) aus zwei Lenkern (42, 43) gebildet ist, die drehbar in Bezug zueinander um eine siebte Achse (44) montiert sind, wobei die besagten fünften, sechsten und siebten Achsen parallel zueinander und zur Gruppe der ersten, zweiten, dritten und vierten Achsen verlaufen.

5) Fahrwerk gemäß Anspruch 4, dadurch gekennzeichnet, daß es steuerbare Mittel (40) umfaßt, die mit der besagten Hilfsstrebe (41) zusammenarbeiten, um diese zu zerbrechen und diese starr zu halten.

6) Fahrwerk gemäß Anspruch 1, dadurch gekennzeichnet, daß der Abstand, der die beiden besagten inneren Schenkel (68, 69) von den beiden anderen Schenkeln (67, 68) trennt, maximal ist.

7) Fahrwerk nach Anspruch 6, dadurch gekennzeichnet, daß der eine der Schenkel (67, 68) eines der Bügel (65) in Kontakt mit einem der Schenkel (69, 70) des anderen Bügels (66) steht.

## Claims

1/ An undercarriage for an aircraft including a rigid structure, the undercarriage comprising: a leg (1) pivotally mounted about a first axis (14) which is fixed relative to said rigid structure; a main side-brace (30) comprising at least two levers (31, 32) articulated to each other about a fourth axis (33), and having their ends articulated respictively about a second axis (37) which is fixed relative to said rigid structure and a third axis (36) which is fixed relative to said leg; means (40, 41) for controlling rotation of said two levers (31, 32) relative to each other; said first (14), second (37), third (36), and fourth (33) axes being parallel to one another, wherein the two levers (31, 32) of the main side-brace (30) respective two-tined forks with tines (67, 68, 69, 70) articulated about said fourth pivot axis (33), characterized in that said two levers (31, 32), have an I-profile right cross section with a central web (71, 72) and flanges (73, 74, 75, 76) and are articulated by forks (65, 66) about said axis (33), with the general direction (60, 61) of each of said two levers being located, when in an "undercarriage extended" position, on a common direction (62) which intersects said fourth axis (33) at a point 8 located between the tines of the forks, said point 8 being at the point of an obtuse angle 6 defined by the fourth axis (33) and the common direction (62) of the main side-brace (30), the assembly being such that one tine (68, 69) of each fork is situated between both tines (67, 70) of the other, and that the tine (67, 70) situated on the acute angle side, as defined by the direction of the fourth axis and the common direction (62) is situated above the other tine (69, 68) of the other fork relative to the point S.

2/ An undercarriage according to claim 1, characterized by the fact that the position of said second axis (37) on said rigid structure lies outside a plane perpendicular to said first axis (14) and including said leg (1).

3/ An undercarriage according to claim 1 or 2, characterized by the fact that the position of said second axis (37) is located above a plane passing through the position of said first axis (14) and perpendicular to the leg (1) when the undercarriage is extended.

4/ An undercarriage according to any preceding claim, characterized by the fact that the means for controlling pivoting of the two levers (31, 32) include an auxiliary collapsible side-brace (41) whose two ends are pivotally mounted respectively about a fifth axis (48) belonging to said rigid structure and about a sixth axis (47) belonging to one of said two levers of the main side-brace (30), said auxiliary collapsible side-brace (41) being constituted by two rods (42, 43) pivotally mounted relative to each other about a seventh axis (44), said fifth, sixth, and seventh axes being parallel to one another and to the group of the first, second, third, and fourth axes.

5/ An undercarriage according to claim 4, characterized by the fact that it includes controllable means (40) co-operating with said auxiliary side-brace (41) to cause it to collapse and to hold it rigid.

6/ An undercarriage according to claim 1, characterized by the fact that there is as great a distance as possible between said inside tines (68, 69) and said other tines.

7/ An undercarriage according to claim 6, characterized by the fact that each tine (67, 68) of each of the forks (65) is in contact with one of the tines (69, 70) of the other fork (66).

FIG . 1

FIG.3

FIG.2

FIG.4